## Europäisches Patentamt

## European Patent Office

## Office européen des brevets

(19)

(11) Veröffentlichungsnummer: **0 245 372**
**B1**

(12) **EUROPÄISCHE PATENTSCHRIFT**

(45) Veröffentlichungstag der Patentschrift: **09.01.91**

(51) Int. Cl.$^5$: **A 01 G 25/09**

(21) Anmeldenummer: **86906705.8**

(22) Anmeldetag: **10.11.86**

(86) Internationale Anmeldenummer:
**PCT/AT86/00073**

(87) Internationale Veröffentlichungsnummer:
**WO 87/02862 21.05.87 Gazette 87/11**

(54) **KORREKTURSTEUERUNG FÜR EIN LINEAR BEWEGBARES BERIESELUNGSSYSTEM.**

(30) Priorität: **11.11.85 AT 3277/85**

(43) Veröffentlichungstag der Anmeldung:
**19.11.87 Patentblatt 87/47**

(45) Bekanntmachung des Hinweises auf die
Patenterteilung:
**09.01.91 Patentblatt 91/02**

(84) Benannte Vertragsstaaten:
**DE FR GB IT**

(56) Entgegenhaltungen:
**US-A-3 613 703**
**US-A-3 974 845**
**US-A-4 190 068**

(73) Patentinhaber: **RÖHREN-UND PUMPENWERK
RUDOLF BAUER AKTIENGESELLSCHAFT
A-8570 Voitsberg (AT)**

(72) Erfinder: **WOLFBAUER, Wilhelm
Lannerweg 1
A-8072 Fernitz (AT)**
Erfinder: **STADLER, Vinzenz
Steinbruchweg 3
A-8152 Stallhofen (AT)**

(74) Vertreter: **Piso, Eberhard, Dr. et al
Patentanwälte Dipl.-Ing. Herbert C.E. Krause Dr.
Eberhard Piso Gluckgasse 1 Fach 328
A-1010 Wien 1 (AT)**

EP 0 245 372 B1

**Beschreibung**

Die Erfindung betrifft eine Korrektursteuerung für ein linear bewegbares Berieselungssystem, bestehend aus Fahrtürmen und von diesen getragenen, miteinander gekuppelten Rohrleitungen, wobei mindestens ein angetriebener, mit einem weiteren Fahrturm über eine Rohrleitung verbundener Fahrturm eine Steuereinheit bildet, zum Korrigieren des Berieselungssystems bei einer in bezug auf eine Führungsbahn auftretende Winkelverschiebung, welche von sich auf einer waagerechten, zur Führungsbahn parallelen, im Bereich eines der Steuereinheit zugehörigen Fahrturmes als Tastarm angeordneten Stange befindenden Fühlern erkannt wird, welche Fühler mit der Führungsbahn in Wirkverbindung stehen.

Beregnungssysteme dieser Art werden im allgemeinen durch eine Steuereinheit und mehrere aneinandergekuppelte Ausleger gebildet, wobei die Steuereinheit meist am Rand angeordnet ist und der Korrektursteuerung dient, d.h. der Korrektur einer Abweichung gegenüber der Führungsbahn, während die Ausleger ihr gegenseitiges Vorrücken über eine Richtsteuerung ausgleichen.

Aus der DE—OS 2 851 425 ist ein linear bewegbares Berieselungssystem bekannt, welches über eine Fühleranordnung mit einer unterirdisch verlegten, elektrischen Leiterbahn korrespondiert, um bei einem Abweichen von dieser Bahn den Antrieb des jeweils äußersten Auslegers zu stoppen. Die Fühleranordnung ist auf einer horizontalen Stange befestigt, die ihrerseits starr und vorzugsweise unter einem Winkel von 90° mit dem Ausleger verbunden ist. Der für die Stellung des Beregnungssystems zuständige Referenzpunkt ist hinsichtlich seiner Position zur Beregnungsleitung festgelegt.

Weiters wird vorgeschlagen, die Stange für eine Schwenkbewegung um eine vertikale Achse drehbar am Ausleger bzw. am Fahrturm zu lagern und das freie Ende an einer am Feldrand angeordneten Führungseinrichtung (Schiene, Seil, etc.) gleitend zu führen. Als Maß für die Abweichung gilt der Drehwinkel der Stange. Ein im Bereich der Drehachse angeordneter Winkelfühler registriert jede Abweichung vom rechten Winkel und gibt den Steuerbefehl an den jeweils äußersten Fahrturm weiter. Die beiden erwähnten Steuerungsarten setzen voraus, daß sich der Ausleger bzw. der Fahrturm, auf dem die Stange angeordnet ist, verdreht. Diese Verdrehung ist aber dann besonders kritisch, wenn dieser Ausleger die Steuereinheit mit den darauf angeordneten schweren Aggregaten darstellt und gleichzeitig auch das äußerste Element des Beregnungssystems bildet.

Je nach Fahrtrichtung und Art der Fehlermeldung des Abtastmechanismus wird einer der beiden äußersten Fahrtürme festgehalten und stellt somit den Drehpunkt für das sich weiterbewegende Beregnungssystem dar, das nun eine Schwenkbewegung ausführt. Im Zuge dieser Schwenkbewegung wird der Fehler (Schieflauf oder Seitenversatz) wieder ausgeglichen und das Ende der Korrektur von der Abtastvorrichtung wieder erkannt, worauf der eine stillgesetzte Fahrturm wieder den Befehl zum Weiterfahren erhält. Es ist durchaus möglich, daß bei groben Abweichungen der tatsächlichen Fahrtrichtung von der gewünschten mehrere Korrekturen hintereinander ausgeführt werden müssen, bis der Korrekturvorgang abgeschlossen ist.

Besagter Ausleger wird also aufgrund der in der DE—OS 3 049 436 gezeigten Steuerungscharakteristik wie der stationäre Steuerturm einer Pivot-Beregnungsanlage verwendet, um den sich das ganze System solange dreht, bis es sich wieder ausgerichtet hat. Bedingt durch das höhere Gewicht sinken die Räder der Steuereinheit während des Beregnungsvorganges in den aufgeweichten Boden ein und erzeugen Rillen, welche nach Beendigung des Beregnungsvorganges bereits teilweise eingetrocknet und dementsprechend hart geworden sind. Fährt das System nun ohne zu beregnen in die Ausgangsstellung am Feldrand zurück, so können die sich in der eingefahrenen Spur bewegenden Räder seitlich nicht mehr ausweichen und fahren wie auf Schienen. Demzufolge kann die Steuereinrichtung nicht mehr ansprechen, woraus resultiert, daß der vorgeeilte Fahrturm kein Stopsignal erhält. Unter diesen Bedingungen kann der Fall eintreten, daß alle Auslegerelemente weiterfahren, bis sich eine sogenannte "Banane" bildet, was für die Steuereinheit bedeutet, daß sich die Rohrleitung mitsamt dem Fachwerk zwischen den beiden Fahrtürmen gefährlich durchbiegt. Diese Durchbiegung führt meist zur Beschädigung oder zum Bruch der Anlage.

Die CA—PS 1 135 301 zeigt ein linear bewegtes Beregnungssystem, welches mit einer speziellen Richtsteuerung zum Ausrichten der einzelnen Auslegerelemente untereinander ausgestattet ist. Dabei wird die Bewegung für die fahrturmseitig am Ausleger montierter Richtsteuerung über ein Paar Seile vom gegenüberliegenden Ende des Auslegers abgenommen. Das durch das Seilpaar und die zwei Querbalken gebildete starre Vieleck definiert die Lage des Auslegers, sodaß Fehler, die aufgrund einer Durchbiegung desselben in die Richtsteuerung eingehen würden, vermieden werden. Das Vieleck wird in bezug auf die Korrektur der Vorwärtsbewegung des Beregnungssystems dafür herangezogen, um die zwischen zwei bestimmten Fahrtürmen—die für die Korrektur der Vorwärtsbewegung zuständig sind—angeordneten zwei Schaltkästen so zu verdrehen, daß eine Abwinkelung zum benachbarten Rohrstück bei einem Schlieflauf scheinbar vergrößert oder verkleinert wird, woraus ein Stillsetzen eines der beiden Türme und ein Verdrehen des Systems um diesen bzw. dessen Wiederanlaufen resultiert. Für das Erkennen eines Seitenversatzes des Systems ist ein zusätzlicher Schaltkasten mit Abtastvorrichtung angeordnet.

Die US—A 3 974 845 zeigt ein selbstkorrigierendes linear bewegbares Beregnungssystem. Von der Steuereinheit dieses Systems erstreckt sich ein Arm in Richtung einer Führungsbahn und trägt eine mit in eine Führungsfläche dieser Führungsbahn eingreifenden Rollen versehene Einrichtung, welche dem Halten der Spur dient. Entlang dieses Armes sind Winkelfühler angeordnet, welche den Winkel zwischen dem Arm und der Einrichtung messen und derart ein Abweichen des Beregnungssystems von der vorgegebenen Bahn erkennen.

Aufgabe der Erfindung ist die Schaffung einer möglichst einfachen, weder in der Herstellung noch in ihrer Montage oder Justierung komplizierten Korrektursteuerung für ein linear bewegbares Beregnungssystem, mit deren Hilfe eine unerwünscht starke Durchbiegung der Steuereinheit beim Korrigieren der Winkelverschiebung des Systems in bezug auf die Führungsbahn ausgeschaltet wird und die über dies eine hohe Betriebssicherheit aufweist, sodaß eine Beschädigung der Anlage weitestgehend vermieden werden kann.

Die Erfindung löst die Aufgabe dadurch, daß die Stange durch eine am angetriebenen Fahrturm der Steuereinheit angeordnete vertikale Achse gegenüber der Führungsbahn drehbar ist, und daß die Stange über Seile mit einem zu ihm parallel geführten Balken und der Balken über Seile mit einer am äußeren Ende der Rohrleitung der Steuereinheit im Bereich des weiteren Fahrturmes angeordneten Halterung verbunden ist.

Ein weiteres Merkmal der Erfindung ist es, daß die Fühler am jeweils freien Ende des Tastarmes angeordnet sind.

Ein anderes Merkmal der Erfindung ist es, daß der Balken im Bereich des den Tastarm tragenden Fahrturmes um eine mit der Rohrleitung fest verbundene, vertikal Achse drehbar gelagert ist und daß der Balken mit den zur Halterung führenden Seilen ein gleichschenkeliges Dreieck bildet.

Ein anderes weiteres Merkmal der Erfindung liegt darin, daß die Halterung mit der Rohrleitung fest verbunden ist.

Die Erfindung wird in der Zeichnung an Hand eines Ausführungsbeispieles näher veranschaulicht.

Es zeigen die Fig. 1 eine Seitenansicht der Steuereinheit eines Beregnungssystems, die Fig. 2 eine Draufsicht auf den Korrektursteuerungsteil der Steuereinheit und die Fig. 3 das Funktionsschema derselben in einer vereinfachten Ausführungsform.

Die Steuereinheit wird durch die beiden Fahrtürme 1, 2, die durch eine in ein Fachwerk 3 eingebundene, mit Regnern 4 bestückte Rohrleitung 5 verbunden sind, gebildet.

Der Fahrturm 1 trägt einen in der Zeichnung nicht dargestellten Generator und eine Pumpe und besitzt zwecks Vergrößerung der Auflagefläche vier, durch ebenfalls nicht gezeigte Elektromotoren mit Getriebe angetriebene Räder 6, während der gegenüberliegende, wesentlich leichtere Fahrturm 2 auf zwei Rädern 7 fährt.

Wasseranschlüsse 8 am Fahrturm 1 für Vorwärtsfahrt des Beregnungssystems in Richtung des Pfeiles 9 bzw. Anschlüsse 8' für die Rückwärtsfahrt entgegen der Pfeilrichtung leiten das Beregnungswasser über eine Steigleitung 10 zur Rohrleitung 5.

An einer seitlichen, vom Fahrturm 1 wegragenden Halterung 11 ist ein waagrechter Tastarm 12 gelagert, der mittig um eine vertikale Achse 13 verdreht werden kann. An einem freien Ende des Tastarmes 12 befindet sich ein Fühler 14 für die Vorwärtsfahrt, sowie am gegenüberliegenden Ende ein äquivalenter Fühler 14' für die Rückwärtsfahrt.

Diese beiden Fühler 14, 14' bestehen—wie z.B. von Richtsteuerungen bei Linear- oder Pivotssystemen bekannt—aus einer in der Zeichnung nicht dargestellten Schaltnocke und zwei damit korrespondierenden Steuerschaltern. Mechanische Fühler 15, 15' mit Führungsrollen 16, 16' stellen die Verbindung zwischen der Schaltnocke und dem am Feldrand gespannten Führungsseil 17 her, wobei die Führungsrollen 16, 16' während des Verfahrens der Beregnungsanlage stets mit dem Führungsseil 17 in Kontakt bleiben. Diese Abtastung muß nicht notwendigerweise als mechanische Abtastung ausgebildet sein, sondern es kann auch eine berührungslose, elektromagnetische Abtastung Verwendung finden. Vom Tastarm 12 weg führen zwei Seile 18, 18' über Umlenkrollen 19, 20 bzw. 19', 20' zu den beiden freien Enden eines waagrechten Balkens 21, der seinerseits um eine vertikale Achse 22 drehbar am Ende des Rohrstranges 5 im Bereich des Fahrturmes 1 gelagert ist.

Von der Anlenkungpunkten der Seile 18, 18' am Balken 21 erstreckt sich ein Paar horizontaler Seile 23, 23' bis zu einer im Bereich des Fahrturmes 2 an der Rohrleitung 5 angebrachten Halterung 24, an welcher beide befestigt sind.

Es ist aber ohne weiteres möglich, den Tastarm 12 direkt mit der an der Rohrleitung 5 angeordneten Halterung 24 zu verbinden, ohne das Wirkungsprinzip zu beeinträchtigen. Diese Variante ist in der Zeichnung nicht dargestellt.

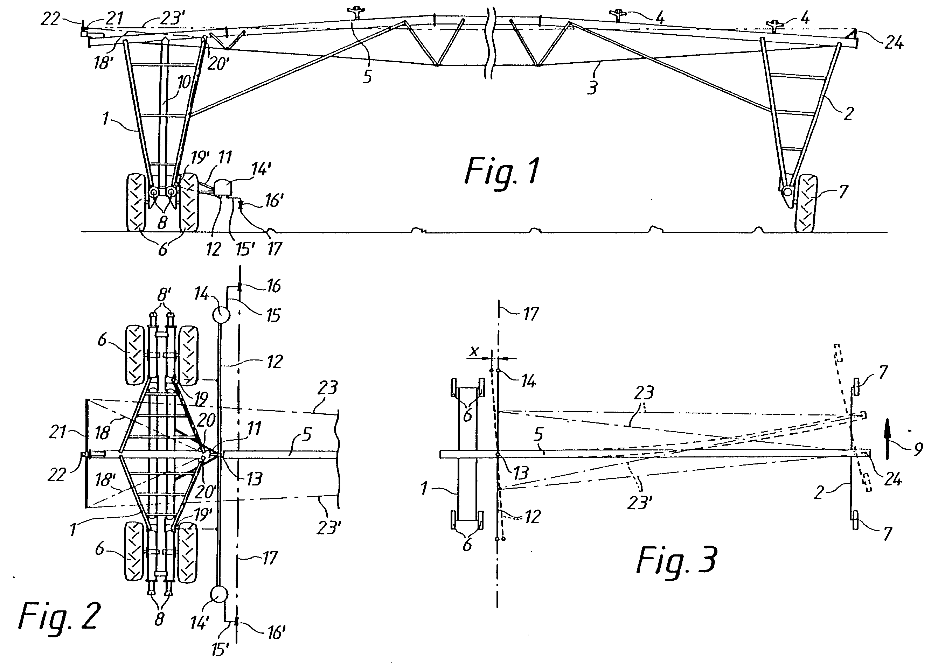

Die Wirkungsweise der erfindungsgemäßen Korrektursteuerung wird aus der Fig. 3 ersichtlich:

Fährt die Steuereinheit und damit das gesamte Beregnungssystem im rechten Winkel zum Führungsteil 17, so deckt sich der Tastarm 12 mit dem Führungsseil 17 oder steht nach Fig. 2 in einer Lage parallel zu diesem, was bedeutet, daß die Korrektursteuerung unbetätigt bleibt.

Eilt hingegen, beispielsweise bei der Vorwärtsfahrt in Richtung des Pfeiles 9, der rechte äußerste Ausleger des Beregnungssystems und damit in weiterer Folge auch der Fahrturm 2 der Steuereinheit vor, so muß besagter rechter äußerster Ausleger gestoppt werden, bevor es zu einer sogenannten "Bananenbildung" bzw. zu einer gefährlichen Durchbiegung der Steuereinheit kommt. Während sich bei den herkömmlichen Korrektursteuerungen in einer solchen Situation der Fahrturm 1 verdrehen müßte, um die Winkelverschiebung in bezug auf die Führungsbahn messen zu können, verbleibt der Fahrturm 1 mit Hilfe der erfindungsgemäßen Korrektursteuerung ohne jede Verdrehung in seiner Fahrspur.

Die geringfügige zulässige Durchbiegung der Rohrleitung 5 samt Fachwerk 3 wird gemäß Fig. 3 vom Seil 23' direkt auf den Tastarm 12 übertragen, welcher dann in der strichliert gezeichneten Lage an seinem freien Ende einen Abstand X vom Führungsseil 17 aufweist. Dieser Abstand X wird vom Fühler 14 (durch Verdrehen der Schaltnocke spricht der entsprechende Steuerschalter an) registriert und in diesem Fall der Steuerbefehl zum Stoppen des äußersten rechten Auslegers gegeben. Auf die gleiche Art und Weise wird der vorgeeilte äußerste linke Ausleger—sollte dieser Ausleger gleichzeitig die Zentraleinheit bilden, der Fahrturm 1—gestoppt. Infolge einer entgegengesetzten Durchbiegung der Rohrleitung 5 kommt der Tastarm 12 in bezug auf das Führungsseil 17 spiegelbildlich verkehrt zu stehen, was wiederum vom Fühler 14 erfaßt und in das entsprechende Steuersignal umgesetzt wird.

Wie bereits erwähnt, zeigt die Fig. 3 eine vereinfachte Ausführungsform der erfindungsgemäßen Korrektursteuerung, wobei das Seilpaar 23, 23' von der Halterung 24 ausgehend direkt mit dem Tastarm 12 verbunden ist.

Da in der Praxis eine solche Lösung aus Platzgründen nicht möglich ist, sind die Seile 23, 23' nach Fig. 1 und Fig. 2 entlang der Rohrleitung 5 verlegt. Diese erfassen die Durchbiegung der Steuereinheit und zeigen sie am Balken 21 an, während die Seile 18, 18' die Bewegung ohne Über- oder Untersetzung vom Balken 21 auf den Tastarm 12 übertragen, d.h. der Balken 21 und der Tastarm 12 stehen stets parallel zueinander.

## Patentansprüche

1. Korrektursteuerung für ein linear bewegbares Berieselungssystem, bestehend aus Fahrtürmen und von diesen getragenen miteinander gekuppelten Rohrleitungen, wobei mindestens ein angetriebener, mit einem weiteren Fahrturm (2) über eine Rohrleitung (5) verbundener Fahrturm (1) eine Steuereinheit bildet, zum Korrigieren des Berieselungssystems bei einer in bezug auf eine Führungsbahn auftretenden Winkelverschiebung, welche von sich auf einer waagrechten, zur Führungsbahn parallelen, im Bereich eines der Steuereinheit zugehörigen Fahrturmes als Tastarm (12) angeordneten Stange befindenden Fühlern (14, 14') erkannt wird, welche Fühler mit der Führungsbahn in Wirkverbindung stehen, dadurch gekennzeichnet, daß die Stange um eine am abgetriebenen Fahrturm (1) der Steuereinheit angeordnete vertikale Achse (13) gegenüber der Führungsbahn drehbar ist und daß die Stange über Seile (18, 18') mit einem zu ihm parallel geführten Balken (21) und der Balken (21) über Seile (23, 23') mit einem am Ende der Rohrleitung (5) der Steuereinheit im Bereich des weiteren Fahrturmes (2) angeordneten Halterung (24) verbunden ist.

2. Korrektursteuerung nach Anspruch 1, dadurch gekennzeichnet, daß der Balken (21) im Bereich des den Tastarm (12) tragenden Fahrturmes (1) um eine mit der Rohrleitung (5) fest verbundene, vertikale Achse (22) drehbar gelagert ist.

3. Korrektursteuerung nach Anspruch 1, dadurch gekennzeichnet, daß die Fühler (14, 14') am jeweils freien Ende des Tastarmes (12) angeordnet sind.

4. Korrektursteuerung nach einem der Ansprüche 1 bis 3, dadurch gekennzeichnet, daß der Balken (21) mit den zur Halterung (24) führenden Seilen (23, 23') ein gleichschenkeliges Dreieck bildet.

5. Korrektursteuerung nach einem der Ansprüche 1 bis 4, dadurch gekennzeichnet, daß die Halterung (24) mit der Rohrleitung (5) fest verbunden ist.

## Revendications

1. Commande de correction pour une installation d'arrosage à mouvement linéaire, comprenant des tours mobiles et des conduits tubulaires portés par ces dernières, et accouplées les uns aux autres, au moins une tour mobile menée (1), reliée à une autre tour mobile (2) par l'entremise d'un conduit tubulaire (5), formant une unité de commande en vue de corriger l'installation d'arrosage lors d'un décalage angulaire se produisant par rapport à une piste de guidage et repéré par des détecteurs (14, 14') situés sur une perche horizontale, parallèle à la piste de guidage et disposée, en tant que bras palpeur (12), au voisinage d'une tour mobile associée à l'unité de commande, lesdits détecteurs étant en liaison interactive avec la piste de guidage, caractérisée par le fait que la perche peut tourner, par rapport à la piste de guidage, autour d'un axe vertical (13) implanté sur la tour mobile menée (1) de l'unité de commande; et par le fait que la perche est reliée, par l'intermédiaire de câbles (18, 18'), à une poutrelle (21) guidée parallèlement à ladite perche, ladite poutrelle (21) étt reliée, par l'entremise de câbles (23, 23'), à un élément de retenue (24) disposé à l'extrémité du conduit tubulaire (5) de l'unité de commande, au voisinage de l'autre tour mobile (2).

2. Commande de correction selon la revendication 1, caractérisée par le fait que la poutrelle (21) est montée à rotation, au voisinage de la tour mobile (1) portant le bras palpeur (12), autour d'un axe vertical (22) relié rigidement au conduit tubulaire (5).

3. Commande de correction selon la revendication 1, caractérisé par le fait que les détecteurs (14, 14') sont disposés à l'extrémité respectivement libre du bras palpeur (12).

4. Commande de correction selon l'une des revendications 1 à 3, caractérisée par le fait que la poutrelle (21) forme un triangle isocèle avec les câbles (23, 23') gagnant l'élément de retenue (24).

5. Commande de correction selon l'une des revendications 1 à 4, caractérisée par le fait que l'élément de retenue (24) est relié rigidement au conduit tubulaire (5).

## Claims

1. Correction control for a linearly movable spraying system, consisting of travelling towers and interconnected pipes supported by said travelling towers, at least one driven travelling tower (1) connected to a further travelling tower (2) via a pipe (5) forming a control unit, for correcting the spraying system in the case of an angular displacement occuring in relation to a guide path, which angular displacement is detected by sensors (14, 14') situated on a horizontal bar arranged as a scanning arm (12) parallel to the guide path in the region of a travelling tower belonging to the control unit, which sensors are in effective connection with the guide path, characterized in that the bar is rotatable in relation to the guide path about a vertical axle (13) arranged on the driven travelling tower (1) of the control unit, and in that the bar is connected via ropes/cables (18, 18') to a beam (21) guided parallel to it and the beam (21) is connected via ropes/cables (23, 23') to a bracket (24) arranged at the end of the pipe (5) of the control unit in the region of the further travelling tower (2).

2. Correction control according to Claim 1, characterized in that, in the region of the travelling tower (1) supporting the scanning arm (12), the beam (21) is mounted rotatably about a vertical axle (22), connected fixedly to the pipe (5).

3. Correction control according to Claim 1, characterized in that the sensors (14, 14') are arranged in each case at the free end of the scanning arm (12).

4. Correction control according to one of Claims 1 to 3, characterized in that the beam (21) forms an isosceles triangle with the ropes/cables (23, 23') leading to the bracket (24).

5. Correction control according to one of Claims 1 to 4, characterized in that the bracket (24) is connected fixedly to the pipe (5).

EP 0 245 372 B1

**Fig. 1**

**Fig. 2**

**Fig. 3**